# EUROPÄISCHE PATENTSCHRIFT

(11) **EP 3 586 622 B1**
(45) Veröffentlichungstag und Bekanntmachung des Hinweises auf die Patenterteilung: **23.06.2021**
(21) Anmeldenummer: 18401093.2
(22) Anmeldetag: 05.11.2018
(51) Int. Cl.: A01K 97/12

(54) **HANGER ZUR BISSANZEIGE BEIM ANGELN**
HANGER FOR BITE INDICATION WHEN FISHING
INDICATEUR DE TOUCHE SUSPENDU LORS DE LA PÊCHE

(30) Priorität: 21.06.2018 DE 102018114932
(43) Veröffentlichungstag der Anmeldung: 01.01.2020
(73) Patentinhaber: Poseidon-Angelsport OHG, 02627 Radibor (DE)
(72) Erfinder: Buchwald, Tommy, 02627 Radibor (DE)
(74) Vertreter: Haschick, Gerald

(56) Entgegenhaltungen:
- EP-A1- 2 141 367
- EP-A1- 2 253 205
- GB-A- 2 047 061
- GB-A- 2 462 902

## Beschreibung

Die Erfindung betrifft eine zusätzliche Vorrichtung als Hanger zur optischen Bissanzeige beim Angeln.

Ziel der Erfindung ist es, einen Hanger zur optischen Bissanzeige beim Angeln zu entwerfen, womit der Angler eine sofortige optische Anzeige erhält, wenn ein Biss an seiner Angel stattgefunden hat.

Bekannt ist die Patentschrift GB 2 047 061 A, welche einen Bissindikator zur Verwendung beim Ruten- und Leinenfischen beschreibt, der eine Spule umfasst, die so angeordnet ist, dass sie an einer Angelschnur aufgehängt ist und sich in einem transparenten Gehäuse befindet, das zur Befestigung am Boden geeignet ist. Das transparente Gehäuse schützt die Spule vor Wind und Regen und ermöglicht gleichzeitig die Beobachtung ihrer Bewegung.

Aus der Patentschrift GB 2 462 902 A ist ein Leinenfreigabemechanismus bekannt, welcher einen Hauptkörper umfasst, der mit einer Angelschnur-Eingriffsvorrichtung versehen ist. Die Eingriffsvorrichtung umfasst eine Schlaufe und einen Vorsprung, der sich durch die Schlaufe erstreckt, jedoch gegen die Rückstellkraft einer vorzugsweise schraubenförmigen Druckfeder aus der Schlaufe in den Hauptkörper zurückgezogen werden kann. Die Rückstellkraft der Druckfeder ist mittels eines einstellbaren drehbaren Nockens innerhalb des Hauptkörpers einstellbar. Die Ausstülpung kann mit einem länglichen Teil verbunden sein, der sich axial durch den Hauptkörper erstreckt. Ein Fischbissindikator, der den Linienfreigabemechanismus enthält, ist ebenfalls offenbart.

Zum Stand der Technik zählt aus der Patentanmeldung EP 2 141 367 A1 eine Verbindungsvorrichtung, umfassend einen ersten Teil mit einem ersten Schlitz darin mit einer Querschnittsform mit einem inneren Abschnitt und einem äußeren Abschnitt, der schmaler als der innere Abschnitt ist und sich öffnet auf einen ersten Oberflächenabschnitt des ersten Teils. Der erste Teil hat auch einen zweiten Schlitz in einem Winkel zum ersten Schlitz und öffnet sich zu dem ersten Oberflächenabschnitt und auch zu einem zweiten Oberflächenabschnitt von dem ersten Teil, dessen zweiter Oberflächenabschnitt im Allgemeinen in einem Winkel zu dem ersten Oberflächenabschnitt steht. Die Verbindungsvorrichtung hat auch einen zweiten Teil mit einem Kopfabschnitt mit einem Querschnitt, der eine geringere Breite als der des inneren Abschnitts des Querschnitts des ersten Schlitzes aufweist. Dieser ist aber breiter als der äußere Abschnitt des ersten Schlitzes und ist auch breiter als der zweite Schlitz, so dass er nicht daraus entweichen kann. Der zweite Teil hat auch einen Halsabschnitt, der eine schmalere Breite als der äußere Abschnitt des ersten Schlitzes hat und der eine schmalere Breite als der zweite Schlitz hat. Der zweite Teil kann daher in den ersten Schlitz eingeführt und dann entlang dieses geschoben werden, wobei der Kopfabschnitt des zweiten Teils innerhalb und entlang des inneren Abschnitts gleitet und der Halsabschnitt, der innerhalb und entlang des äußeren Abschnitts des ersten Schlitzes gleitet, woraufhin der zweite Teil gedreht werden kann.

Die Patentschrift EP 2 253 205 A1 weist einen Fischbissanzeiger mit einem Arm auf, der an einem Ende an einer Befestigungsvorrichtung des Indikators angelenkt ist. Der Arm ist an seinem anderen Ende mit einem Anzeigekopf versehen. Der Kopf ist mit einem Leinen-Eingriffsmechanismus versehen, der so konstruiert ist, dass er bei Verwendung eine Angelschnur beibehält, diese jedoch bei einem Schlag freigibt. Der Linieneingriffsmechanismus weist ein bewegliches Element auf, das relativ zum Kopf beweglich ist, um eine solche Freigabe zu bewirken. Der Kopf ist schwenkbar am Arm montiert und das bewegliche Element ist über eine Armkupplungsvorrichtung mit dem Arm verbunden, um die Leitung freizugeben.

Aufgabe der Erfindung ist es, eine zusätzliche Vorrichtung zur optischen Bissanzeige beim Angeln zu realisieren, welche mit geringem technischen Aufwand und einfacher Installation ausführbar ist.

Die Aufgabe wird erfindungsgemäß dadurch gelöst, dass ein Hanger zur optischen Bissanzeige beim Angeln gemäß des Patentanspruches 1 ausgeführt wird.

Dabei wurde ein Hanger zur optischen Bissanzeige beim Angeln so entwickelt,
- dass seitlich an einem Körper ein Kanal gegeben ist, worin ein Seil, welches an beiden Enden eine Schlaufe aufweist, eingefädelt wird und auf der anderen Seite des Körpers ein Bogen vorhanden ist, wobei der Bogen eine U-Form aufweist und fest in dem Körper vorhanden ist, wobei ein Haken über einen Bogen arretiert und in zwei Richtungen beweglich ist und an dem Haken in Reihenfolge ein Ring in Verbindung mit dem Bogen unterhalb des Bogens befestigt ist sowie eine Perle, welche als Abstandshalter zwischen dem Ring und der Befestigung des Seiles oberhalb der Perle dient, angeordnet ist und der Ring, welcher aus Gummi besteht, für die Spannung zwischen dem Haken und dem Bogen verantwortlich ist.

Der Hanger dient zur optischen Bissanzeige beim Angeln. Dazu wird er an einer speziell gegebenen Vorrichtung, zum Beispiel eines Ständers, und einer vorhandenen zum Stand der Technik gehörenden Verbindung und dem Hanger ausgeführt.

Die erfinderische Lösung liegt in dem Verschluss des Hangers, egal wie schwer der Körper des Hangers ist, wenn dieser die Angelschnur mit gleichem Druck bei der Rutenaufnahme freigibt. Ein Einstellen der Schnurfreigabe, wie bei anderen Modellen, ist hier nicht nötig, was zum wesentlichen erfinderischen Vorteil dienlich ist.

Des Weiteren ist es möglich, jede Angelschur in jeder Stärke zu verwenden. Die Angelschnur wird in einen Haken des Hangers eingegangen, und dieser wird anschließend in einen vorhandenen Bogen gedrückt. Dieser Bogen dient der seitlichen Fixierung des Hakens und bildet gleichzeitig den Anschlag für die Angelschnur. Somit kann die Angelschnur nach keiner Seite freikommen. Bei der Aufnahme der Angelrute strafft sich ein Seil, welches sich in dem Hanger in einem vorhandenen Kanal befindet, und gibt über das Seil einen Druck auf den Haken. Dadurch wird der Haken nach hinten gezwungen und öffnet den Verschluss, so dass die Angelschnur rausgleiten kann.

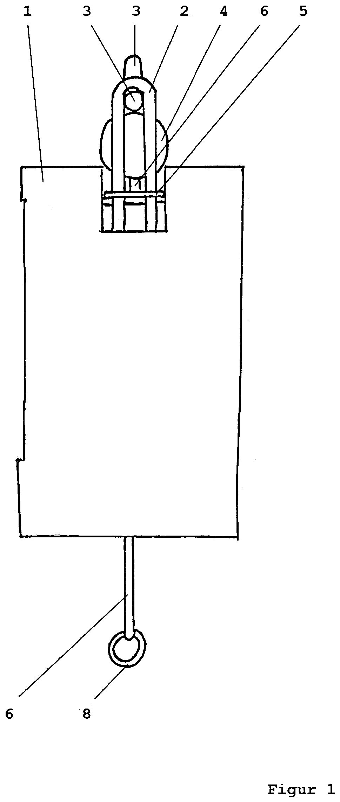

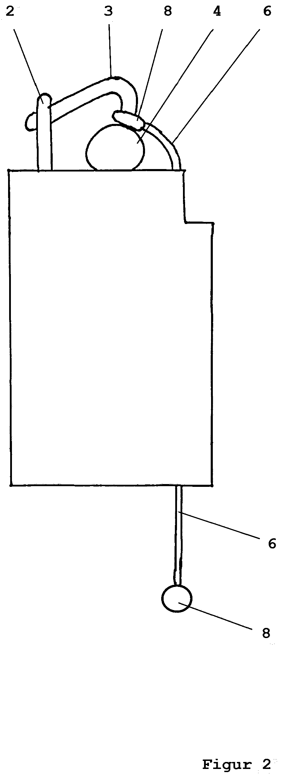

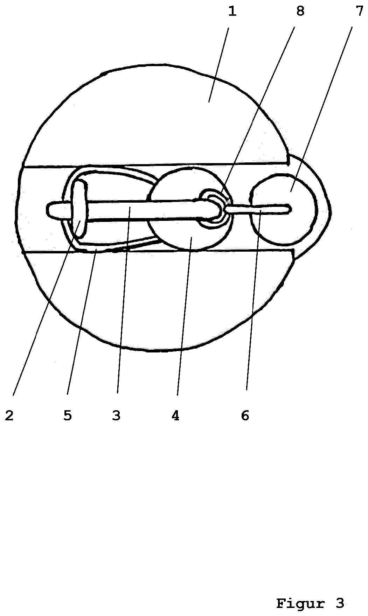

Nachfolgend wird die erfinderische Lösung an einem Ausführungsbeispiel anhand der Figuren 1, 2 und 3 beschrieben.

Dabei zeigen:
- Figur 1: Seitenansicht des Körpers 1
- Figur 2: Seitenansicht des Körpers 1
- Figur 3: Draufsicht des Körpers 1

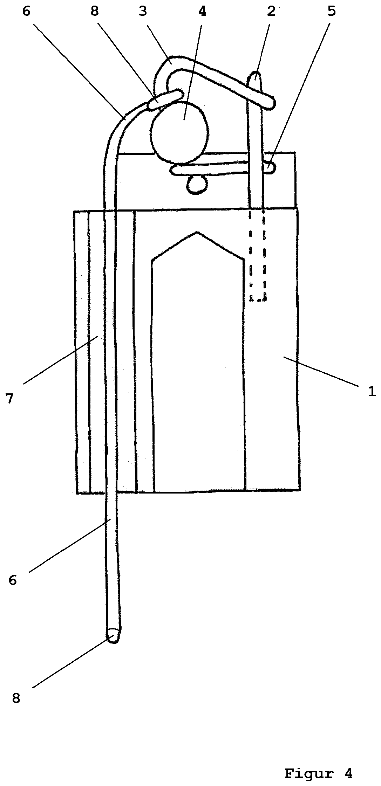

- Figur 4: Querschnittsansicht des Körpers 1

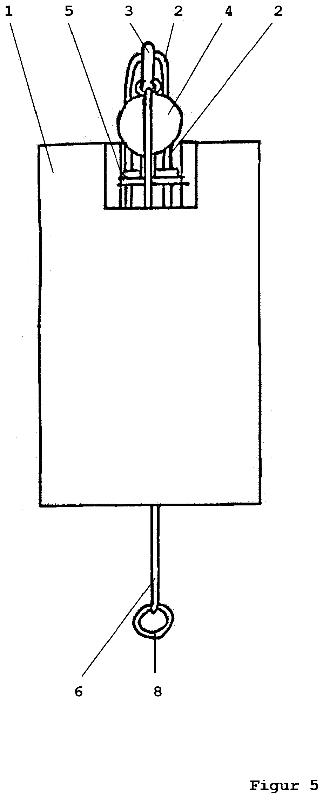

- Figur 5: Rückseitenansicht des Körpers 1
- Figur 6: Anordnung Hanger mit Angel
- Figur 7: Anordnung Hanger mit starrer Verbindung Angel

Aus den Figuren ist ersichtlich, dass ein Körper 1 zur optischen Erkennung eines Anbisses vorhanden ist. Dieser Körper 1 wird auch als Hanger beschrieben. An diesem Körper 1 werden der Bogen 2, der Haken 3, das Seil 6, der Kanal 7, der Ring 5 und die Perle 4 befestigt.

Seitlich an dem Körper 1 ist ein Kanal 7 gegeben, worin ein Seil 6, vorzugsweise ein Edelstahlseil, welches an beiden Enden eine Schlaufe 8 aufweist, eingefädelt wird. Vorzugsweise befindet sich in der unteren Mitte ein inneres Gewinde, welches nach entsprechender Lösung mit einer dementsprechenden Schraube als zusätzliches Gewicht dient.

In dem Körper 1 ist der Kanal 7 für ein Seil 6 gegeben, wobei auf der anderen Seite des Körpers 1 ein Bogen 2, vorzugsweise aus Edelstahl, vorhanden ist. Dieser Bogen 2 dient zur Arretierung eines Hakens 3, welcher zum Lauf der Angelschnur vorhanden ist. Der Bogen 2 ist vorzugsweise in einer U-Form gegeben und fest in dem Körper 1 befestigt. Der Haken 3 wird vorzugsweise auch aus Edelstahl gefertigt. Dieser Haken 3 wird in den Bogen 2 eingebracht. Dabei bleibt der Haken 3 nach zwei Richtungen beweglich. An diesem Haken 3 werden in Reihenfolge der Ring 5 in Verbindung mit dem Bogen 2 unterhalb des Bogens 2 befestigt sowie eine Perle 4, vorzugsweise aus Plastik oder Gummi, welche als Abstandshalter zwischen dem Ring 5 und der Befestigung des Seiles 6 oberhalb der Perle 4 dient.

Beim Gebrauch des Hangers zur optischen Erkennung eines Bisses wird die Angelschnur in den Haken 3 eingeführt. Der Ring 5, welcher vorzugsweise aus Gummi besteht, ist für die Spannung zwischen dem Haken 3 und dem Bogen 2 verantwortlich. Das Seil 6, welches aus Edelstahl oder anderen festen Materialien besteht, hat an jedem Ende eine Schlaufe 8. An der unteren Schlaufe 8 wird eine Kette mit einer Zusatzeinrichtung verbunden. In den oberen Teil des Seiles 6 wird die Schlaufe 8 in den Haken 3 oberhalb der Perle 4 gefädelt. Das Seil 6 verläuft in dem Kanal 7 des Körpers 1. Wie schon beschrieben wird die Angelschnur in den Haken 3 eingefädelt, und dieser wird anschließend in den Bogen 2 des Körpers 1 gedrückt. Dieser Bogen 2 dient der seitlichen Fixierung des Hakens 3 und bildet gleichzeitig den Anschlag für die Angelschnur. Somit kann die Angelschnur nach keiner Seite freikommen. Bei Aufnahme der Angelrute strafft sich eine Kette einer Zusatzeinrichtung und dient mit dem Seil 6 des Hangers über den Kanal 7 zur Befestigung an dem Haken 3. Somit entsteht ein Druck auf den Haken 3, wobei dieser nach hinten gezwungen wird, und öffnet somit den Verschluss zwischen dem Haken 3 und dem Bogen 2. Schlussfolgernd daraus kann die Angelschnur entsprechend ausgleiten.

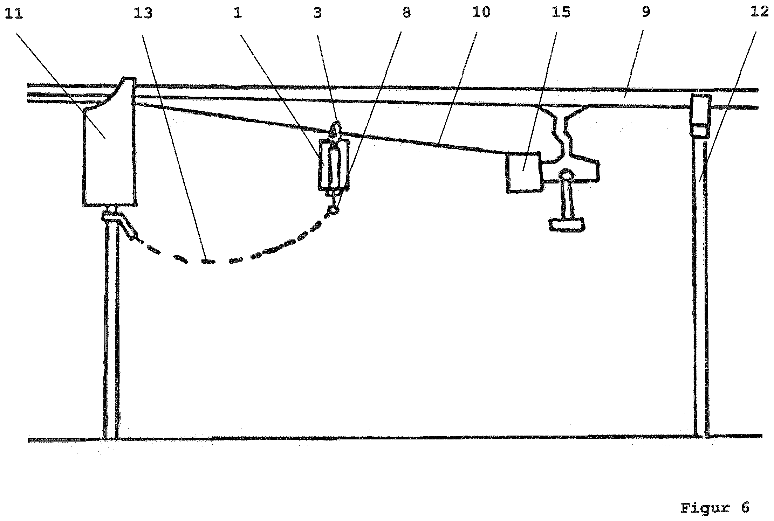

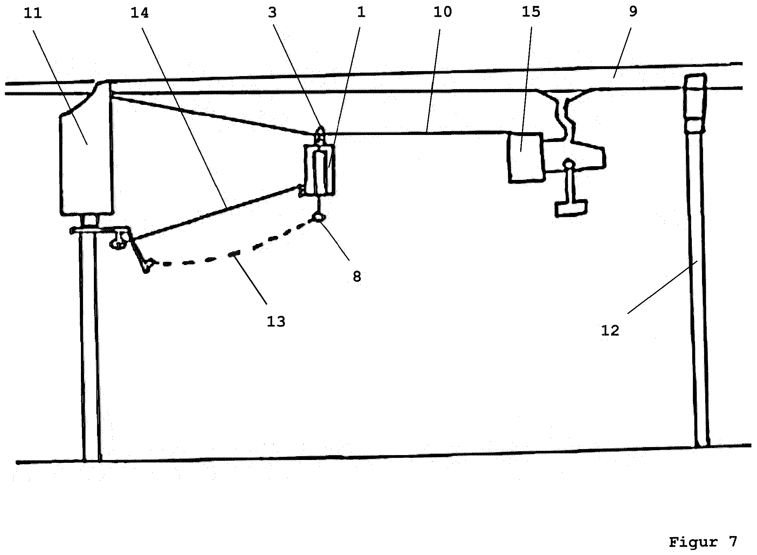

Aus den Figuren 6 und 7 ist die Anwendung des Hangers in Verbindung mit einer Angel 9, einer dazugehörenden hinteren Ablage 12 und einem vorderen Ständer 11 aufgezeigt. Dabei wird der Körper des Hangers 1 über die Schlaufe 8 des Seiles 6 mit einer Kette 13 hin zum Ständer 11 verbunden.

Aus der Figur 6 heraus ist diese Konstruktion gegeben. Wird also nun durch eine Bissanzeige die Angelsehne 10 aus dem Haken 3 des Körpers 1 über den Mechanismus des Körpers 1 hinausgeworfen, wird der Hanger über den Körper 1 und der verbundenen Kette 13 festgehalten.

Aus der Figur 7 heraus ist ersichtlich, dass die Einfädelung des Hangers über den Körper 1 und den Haken 3 mit der Angelsehne 10 stattfindet. Dabei ist der Körper 1 mit einer starren Arretierung 14 hin zu dem Ständer 11 verbunden und gleichzeitig über der Schlaufe 8 mit einer Kette 13 hin zu der starren Arretierung 14 befestigt.

Bei einem Auslösen der Angelsehne 10 der Angel 9 über den Haken 3 des Körpers 1 des Hangers wird die Angelsehne 10 aus dem Haken 3 als Verbindung aufgelöst, und über die starre Arretierung 14 wird der Hanger über den Körper 1 in seiner Verbindung zwischen dem Ständer 11 und der starren Arretierung 14 gehalten.

Des Weiteren kann die starre Arretierung 14 auch beweglich hin zum Ständer 11 ausgeführt werden, und somit fällt dann geordnet der Hanger über den Körper 1 hin zum Ständer 11.

Der Vorteil in der Lösung der Figur 7 ist der geordnete Abfall des Hangers über den Körper 1 in Verbindung mit der starren Arretierung 14 hin zum Ständer 11.

### Bezugszeichen

- 1: Körper
- 2: Bogen
- 3: Haken
- 4: Perle
- 5: Ring
- 6: Seil
- 7: Kanal
- 8: Schlaufe
- 9: Angel
- 10: Angelsehne
- 11: Ständer
- 12: Ablage
- 13: Kette
- 14: starre Arretierung
- 15: Angelrolle

## Patentansprüche

1. Hanger zur optischen Bissanzeige beim Angeln wobei seitlich an einem Körper (1) ein Kanal (7) gegeben ist, worin ein Seil (6), die an einem Haken (3) befestigt ist und welches an beiden Enden eine Schlaufe (8) aufweist, eingefädelt wird, und auf der anderen Seite des Körpers (1) ein Bogen (2) vorhanden ist, wobei der Bogen (2) eine U-Form aufweist und fest in dem Körper (1) befestigt ist, wobei der Haken (3) oberhalb des Körpers über den Bogen (2) arretiert und in zwei Richtungen beweglich ist und an dem Haken (3) in Reihenfolge ein Ring (5) in Verbindung mit dem Bogen (2) unterhalb des Bogens (2) befestigt ist sowie eine Perle (4), welche als Abstandshalter zwischen dem Ring (5) und der Befestigung des Seiles (6) oberhalb der Perle (4) dient, angeordnet ist und der Ring (5), welcher aus Gummi besteht, für die Spannung zwischen dem Haken (3) und dem Bogen (2) verantwortlich ist.

## Claims

1. A hanger for optical bite indication during fishing, wherein a channel (7) is given laterally on a body (1), in which a rope (6), which is fastened to a hook (3) and which has a loop (8) at both ends, is threaded and on the other side of the body (1) a bow (2) is present, the bow (2) having a U-shape and being fixedly fastened in the body (1), wherein the hook (3) is locked above the body over the bend (2) and is movable in two directions, and a ring (5) is attached to the hook (3) in sequence in connection with the bend (2) below the bend (2), and a bead (4), which serves as a spacer between the ring (5) and the attachment of the rope (6) above the bead (4), is arranged, and the ring (5), which is made of rubber, is responsible for the tension between the hook (3) and the bend (2).

## Revendications

1. Pendentif pour signaler optiquement au pêcheur qu'un poisson a mordu, avec un corps (1) comportant un conduit (7) dans lequel passe un filin (6) fixé à un crochet (3) et doté aux deux extrémités d'une boucle (8) et, de l'autre côté du corps (1), un arceau (2) en forme de U solidement fixé dans le corps (1), le crochet (3) étant bloqué sur l'arceau (2) au-dessus du corps et pouvant être déplacé dans deux directions, tandis que sont fixés au crochet (3) successivement un anneau (5) en liaison avec l'arceau (2) au-dessous dudit arceau (2), une bille (4) servant d'entretoise entre l'anneau (5) et la fixation du filin (6) au-dessus de la bille (4), ainsi que l'anneau en caoutchouc (5) assurant la tension entre le crochet (3) et l'arceau (2).
